# EUROPÄISCHE PATENTSCHRIFT

(11) **EP 1 917 287 B1**
(45) Veröffentlichungstag und Bekanntmachung des Hinweises auf die Patenterteilung: **21.09.2011**
(21) Anmeldenummer: 06776321.9
(22) Anmeldetag: 20.07.2006
(51) Int. Cl.: C08G 63/183

(54) **POLYESTER VON TEREPHTHALSÄURE, EIN VERFAHREN ZU DEREN HERSTELLUNG UND DEREN VERWENDUNG**
POLYESTER OF TEREPHTHALIC ACID, METHOD FOR THE PRODUCTION THEREOF, AND USE OF THE SAME
POLYESTER D'ACIDE TEREPHTALIQUE, SON PROCEDE DE PRODUCTION ET SON UTILISATION

(30) Priorität: 29.07.2005 DE 102005035767; 13.02.2006 DE 102006006507
(43) Veröffentlichungstag der Anmeldung: 07.05.2008
(73) Patentinhaber: Deutsche Institute für Textil- und Faserforschung Denkendorf, 73770 Denkendorf (DE)
(72) Erfinder: EFFENBERGER, Franz, 70597 Stuttgart (DE); SCHWEIZER, Michael, 71691 Freiberg am Neckar (DE); HERMANUTZ, Frank, 71229 Leonberg (DE); FRITZ, Andreas, 73035 Göppingen (DE)
(74) Vertreter: Hagemann, Heinrich
(86) Internationale Anmeldenummer: PCT/EP2006/007156
(87) Internationale Veröffentlichungsnummer: WO 2007/014646

(56) Entgegenhaltungen:
- EP-A1- 1 302 498
- DE-B- 1 221 323

## Beschreibung

Die Erfindung betrifft Polyester auf der Basis eines Polykondensationsproduktes von Terephthalsäure und/oder Terephthalsäurederivaten mit zweiwertigen Alkoholen, ein Verfahren zur Herstellung derartiger Polyester sowie deren Verwendung und die dabei erhaltenen Erzeugnisse.

Polyester der oben beschriebenen Art, deren Herstellung sowie deren vorteilhafte Verwendungsmöglichkeiten sind bekannt. Allerdings sind bei der Herstellung von beispielsweise Fasern und Filamenten aus Polyestern bei hohen Aufspulgeschwindigkeiten zahlreiche praktische Fragestellungen ungelöst. Es ist bekannt, dass bei der Herstellung von PET-POY (= pre-oriented yarn) mit Geschwindigkeiten von über 4000 m/min aufgrund der höheren Spinnspannung ein starker Anstieg der Spinnkristallinität auftritt. Daraus resultieren in den nachfolgenden Verarbeitungsschritten, insbesondere beim Texturieren, höhere Faden- und Kapillarbruchzahlen sowie schlechte Kräuselwerte. Im Zusammenhang mit der POY-Produktion wird häufig auf eine Modifizierung, durch die höhere Aufspulgeschwindigkeiten verwirklicht werden sollen, verwiesen. Ziel ist es hierbei, das Einsetzen der Kristallisation zu höheren Spinngeschwindigkeiten zu verschieben und somit eine Steigerung der Produktivität zu gewährleisten. Zahlreiche Arbeiten beschreiben eine Beeinflussung der molekularen Struktur, insbesondere ein Zurückdrängen der Spinnkristallisation, durch eine gezielte physikalische oder chemische Modifizierung.

Im Stand der Technik kann eine Optimierung der Faserqualität bei Polyester-POY mittels physikalischer Modifizierung bei hohen Aufspulgeschwindigkeiten durch das "EVO-Speed-Konzept" gewährleistet werden, das in der Zeitschrift Chemical Fibers Int. 49, 59 (1999) beschrieben wird. Eine höhere Wirtschaftlichkeit garantiert auch der in den Chemical Fibers Int. 48, 220 (1998) erwähnte H5S-Prozess, der eine Struktur kontrollierter Faserherstellung durch Behandlung in einer speziell entwickelten Dampfkammer unmittelbar vor dem Aufwickeln ermöglicht.

Des Weiteren wird die Möglichkeit einer chemischen Modifizierung des Schmelzspinnprozesses in der Fachliteratur beschrieben. Danach werden durch Einbau von Verzweigern in die Molekülketten oder durch Copolymere Aufspulgeschwindigkeiten von mehr als 4000 m/min bei verminderter Kristallinität ermöglicht. Zum speziellen Stand der Technik werden unter anderem die US-A-4 113 704, US-A-4 923 662, DE 197 33 799 A1, das Journal of Applied Polym. Science 31, 2753 (1986) und die Chemical Fibers Int. 53, 445 (2003) genannt.

Diese neuartigen POY-Technologien haben sich industriell in größerem Umfang noch nicht durchgesetzt, da sie häufig mit hohen Kosten verbunden sind und ein konstantes Qualitätsniveau der Garne nicht erreicht wird.

Die Erhöhung des Schrumpfwertes von Fasern, die mit hohen Aufspulgeschwindigkeiten hergestellt werden, wird in der Praxis angestrebt. Unmodifizierte PET-Fasern (PET = Polyethylenterephthalat), die mit mehr als 5000 m/min Aufspulgeschwindigkeit hergestellt werden, besitzen aufgrund der hohen Spinnkristallinität einen Schrumpfwert von deutlich unter 10 %. Der geringe Schrumpfwert wirkt sich auf fast alle Weiterverarbeitungsschritte negativ aus, insbesondere auf die Weberei.

Im Stand der Technik ist die Absenkung der Färbetemperatur für PET ein wichtiges Entwicklungsziel, da das HT-Färben (HT = Hochtemperatur) bei 130 °C mit hohen Energiekosten und aufgrund migrierter Oligomere häufig mit unegalen Färbeergebnissen verbunden ist.

Die DE 1 221 323 B betrifft die Verwendung eines Polymischesters, dessen Ketten, bezogen auf die Kettengliederzahl, zu 90 bis 99% aus dem Ester der Terephthalsäure mit Äthylenglykol sowie zu 1 bis 10% aus Estern der Terephthalsäure mit einer oder mehreren anderen Dioxyverbindungen bestehen, als Isolierstoffe für elektrische Zwecke, insbesondere als Dielektrikum für elektrische Kondensatoren. Bei den Dioxyverbindungen handelt es sich beispielhaft um verschiedene Glykole, wie 1,3-Propandiol, 1,2-Propandiol, 1,2-Butandiol, 1,4-Butandiol, 1,2-Pentandiol sowie 1,5-Pentandiol. Die EP 1 032 498 A1 befaßt sich mit der Herstellung von Copolyester-Harzen, wobei folgende Schritte erfolgen: Veresterung einer Dicarbonsäure mit Ethylenglykol oder einem anderen Glykol zum Zwecke der Modifizierung. Es schließt sich eine Polykondensation in Gegenwart eines Titandioxid/Siliciumdioxid-Co-Ausfällungskatalysators an.

Aufgabe der vorliegenden Erfindung ist es, die eingangs bezeichneten Polyester so zu modifizieren, dass die Schmelztemperatur abgesenkt ist und somit deren Herstellung und Verarbeitung bei niedrigerer Temperatur erfolgen kann, woraus insbesondere geringere Anteile an Neben- und Abbaureaktionen sowie niedrigere Energiekosten resultieren sollen. Des Weiteren ist es Aufgabe der Erfindung, eine gezielte Beeinflussung der Struktur - insbesondere der Kristallinität - von Polyestern der beschriebenen Art zu ermöglichen und umfänglich verbesserte Eigenschaften zu erzielen. Insbesondere ist es auch Ziel der vorliegenden Erfindung, das Anfärben bei erniedrigter Temperatur zur Senkung der Energiekosten zu ermöglichen, so beispielsweise bei einer Temperatur von etwa 100°C.

Erfindungsgemäß wird die obige Aufgabe durch einen Polyester auf der Basis eines Polykondensationsproduktes von Terephthalsäure und/oder Terephthalsäurederivaten mit zweiwertigen Alkoholen, dadurch gelöst, dass zweiwertige Alkohole so ausgewählt sind, dass (I) 70 bis weniger als 89 Mol-% eines Diols bzw. eines Diolgemisches, ausgewählt aus der aus Ethylenglykol, Propan-1,3-diol und Butan-1,4-diol bestehenden Gruppe, auf (II) 30 bis 11 Mol-% Alkan-1,2-diol, ausschließlich Ethylenglykol, entfallen und der Polyester einen Schmelzpunkt von 145 bis 275 °C (nach DIN EN ISO 53765) und eine intrinsische Viskosität (nach DIN 53728) von 0,5 bis 0,7 dl/g aufweist.

Insbesondere ist es bevorzugt, dass die zweiwertigen Alkohole so ausgewählt sind, dass 89 bis 80-Mol-% Ethylenglykol, Propan-1,3-diol und/oder Butan-1,4-diol auf (II) 11 bis 20 Mol-% Alkan-1,2-diol entfallen.

Erfindungsgemäß wird demzufolge aus den bezeichneten Gruppen (i) und (ii) jeweils ein Diol bzw. auch ein Diolgemisch ausgewählt. Das Alkan-1,2-diol der Gruppe (ii) wird durch die nachfolgende Formel (I) gekennzeichnet: 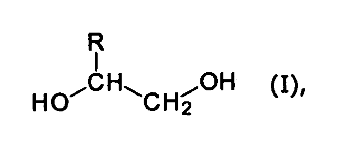 worin bedeuten: R einen Alkyl- und/oder einen Cycloalkyl-Rest. Vorzugsweise hat der Alkyl-Rest 1 bis 12 Kohlenstoffatome und der Cycloalkyl-Rest 3 bis 6 Kohlenstoffatome. Ganz besonders ist ein Alkyl-Rest mit 1 bis 6 Kohlenstoffatomen bevorzugt, wozu der Methyl-, Ethyl, Propyl- und/oder Butyl-Rest zählen, dies in der n- oder isomeren Form. Vorzugsweise ist der Cycloalkyl-Rest ein Cyclopropyl-, Cyclobutyl-, Cyclopentyl- und/oder ein Cyclohexyl-Rest. In Einzelfällen kann es von Vorteil sein, wenn der Alkyl-Rest und/oder der Cycloalkyl-Rest ganz oder teilweise durch einen Aryl-, Alkenyl- und/oder Cycloalkenyl-Rest ersetzt wird. Bevorzugt wird es, wenn der Aryl-Rest einen Phenyl-, Benzyl- und/oder Naphthyl-Rest, der Alkenyl-Rest einen Vinyl-, Allyl- und/oder Isopropenyl-Rest und/oder der Cycloalkenyl-Rest einen 2-Cyclopentenyl-
und/oder Cyclohexenyl-Rest darstellen. Im Allgemeinen sollte diese Substitution der Alkyl- und Cycloalkyl-Rest weniger als 10 Mol %, insbesondere weniger als etwa 5 Mol %, betragen.

Eine entsprechende Substitution gibt es auch für die Terephthalsäure und/oder das Terephthalsäurederivat der erfindungsgemäßen Polyester. Diese können in Einzelfällen ganz oder teilweise durch den Block einer anderen Dicarbonsäure substituiert sein, insbesondere durch Isophthalsäure, Naphthalin-2,6-dicarbon-säure, Hexamethylen-1,6-dicarbonsäure und oder Tetramethylen-1,4-dicarbon-säure. Im Allgemeinen wird es jedoch bevorzugt, dass weniger als 10 Mol % der Terephthalsäure und/oder der Terephthalsäurederivate durch eine andere Dicarbonsäure substituiert sind, insbesondere weniger als 5 Mol %.

Bei der Auswahl der Terephthalsäurederivate unterliegt die Erfindung keiner wesentlichen Einschränkung. Es handelt sich hier insbesondere um einfache Ester, wie beispielsweise einen Terephthalsäuredimethylester.

Die erfindungsgemäßen Polyester zeichnen sich durch einen vergleichsweise niedrigen Schmelzpunktbereich von 145 bis 275 °C aus. Ein Überschreiten des Schmelzpunktes von 275 °C bedeutet ein hohe Anzahl von Neben- und Abbauprodukten, die zu einer Qualitätseinbuße führen, während ein Unterschreiten des Schmelzpunktes von 145 °C zur Folge hat, dass die Polyester bei der Weiterverarbeitung bei den üblichen erhöhten Temperaturen nicht mehr hinlänglich formstabil sind. Die obigen Betrachtungen zum Überschreiten des Schmelzpunktes von 275 °C gelten noch ausgeprägter für das Überschreiten einer Höchsttemperatur von 250 °C. Die Einhaltung des Höchstwertes von 250 °C bedeutet eine weitergehende Qualitätsverbesserung und Steigerung der Formstabilität der Formkörper, die anhand des Polyesters erhalten werden. Besonders vorteilhaft ist der Schmelzpunktbereich von 155 bis 250 °C. Der Bereich von 190 bis 250 °C ist ganz besonders bevorzugt. Durch den gesenkten Schmelzpunkt treten unerwünschte Neben- und Abbaureaktionen in vermindertem Umfang auf. Zudem werden die Energiekosten gesenkt.

In einer gewissen Korrelation zu dem vorteilhaften Schmelzpunkt steht die intrinsische Viskosität der erfindungsgemäßen Polyester nach DIN 35728 von 0,5 bis 0,7 dl/g, insbesondere von 0,55 bis 0,65 dl/g. Ein Unterschreiten des Wertes von 0,5 dl/g bedeutet eine Verschlechterung der Verarbeitbarkeit zu Fasern und Formteilen, während ein Überschreiten von 0,7 dl/g dazu führt, dass die Nachteile bei der Verarbeitbarkeit zu Fasern und Formteilen ebenfalls aufttreten.

Die oben gemachten Ausführungen zum Schmelzpunkt und der Viskosität führen zu nachhaltigen Vorteilen unter folgenden Gesichtspunkten: Zunächst erfolgt mit Vorteil die Polykondensation in der Schmelze. Es kann auch eine Nachkondensation in der Schmelze im festen Zustand oder durch eine gezielte Reaktion mit Kettenverlängerern begünstigend sein.

Die erfindungsgemäßen Polyester unterliegen bei ihrer Herstellung keinen wesentlichen verfahrenstechnischen Einschränkungen. Grundsätzlich werden demnach in üblicher Weise, vorzugsweise in der Schmelze, Terephthalsäure und/oder Terephthalsäurederivaten sowie zweiwertige Alkohole bzw. Diole in Form von (I) Ethylengylkol, Propan-1,3-diol und/oder Butan-1,4-diol sowie (II) der oder den jeweiligen Alkan-1,2-diole bei erhöhter Temperatur von 180 bis 290°C umgesetzt. Ein Überschreiten des Wertes von 290 °C bei der Herstellung könnte dazu führen, dass dennoch unerwünschte Abbaureaktionen stattfinden und diese die Qualität des aus dem erfindungsgemäßen Polyester hergestellten Erzeugnisses beeinträchtigen. Es ist besonders vorteilhaft, wenn der Bereich von 180 bis 270 °C erfindungsgemäß eingehalten wird. Der Höchstwert von 270 °C führt gegenüber dem Höchstwert von 290 °C zu weitergehenden Vorteilen, so zu einer Verbesserung der Qualität des Verfahrenserzeugnisses. Ein Unterschreiten von 180 °C würde dazu führen, dass die Polyester bei den Anwendungstemperaturen nicht mehr formstabil sind. Daher ist es bevorzugt, wenn die Umsetzung der Ausgangsmaterialien zwischen 220 bis 270 °C erfolgt. Des Weiteren ist es für die Durchführung des erfindungsgemäßen Verfahrens wichtig, dass die Ausgangsmaterialien in Übereinstimmung mit den qualitativen und quantitativen Angaben des Anspruchs 1 eingestellt werden und der erhaltene Polyester einen Schmelzpunkt von vorzugsweise 145 bis 250 °C (nach DIN EN ISO 53765) erhält.

Das erfindungsgemäße Verfahren kann diskontinuierlich, so in einem Batchreaktor, oder auch kontinuierlich geführt werden. Die kontinuierliche Verfahrensführung wird bevorzugt. Dabei wird zweckmäßigerweise eine Rührkesselkaskade oder ein Ringscheibenreaktor herangezogen.

Die Polykondensation, die bei der Durchführung des erfindungsgemäßen Verfahrens abläuft, kann vielfältig ausgestaltet sein. So können beispielsweise verschiedene Additive einbezogen werden, wie insbesondere Kettenverlängerer. Kettenverlängerer in Form von Bis-2-oxazolinen und/oder Bis-acyllactamaten sind besonders bevorzugt.

Die Vorteile der erfindungsgemäßen Polyester erweisen sich nicht nur bei deren Herstellung, indem das Herstellungsverfahren sehr ökonomisch geführt werden kann, sondern insbesondere bei den daraus hergestellten Formlingen. Dabei handelt es sich insbesondere um Fasern und Filamente, die durch Schmelzverspinnen gewonnen werden. Gleichermaßen von Vorteil ist es, die erfindungsgemäßen Polyester nach dem Spritzgussverfahren zu Folien, Flaschen oder anderen Formteilen zu verarbeiten. Der Schmelzspinnprozess zur Herstellung von Fasern oder Filamenten aus erfindungsgemäßen Polyestern wird vorzugsweise in dem Temperaturbereich von 220 bis 285 °C, insbesondere von 220 bis 270 °C, ganz besonders bevorzugt in dem Bereich von etwa 245 bis 270 °C durchgeführt. Ganz besonders bevorzugt ist der Bereich von 245 bis 265 °C.

Es werden demzufolge durch die erfindungsgemäße Verwendungslehre vorteilhafte Formlinge gewonnen, insbesondere in Form von Fasern oder Filamenten, die der vorliegenden Erfindung zuzuordnen sind. Die nach dem Schmelzspinnprozess erhaltenen Fasern können zu einem hochwertigen Vlies verarbeitet werden. Dies erfolgt beispielsweise durch ein Luftstromverfahren oder durch Spinnen im elektrischen Feld.

Zur weitergehenden Erläuterung der Erfindung ist Folgendes vorzutragen: Die angesprochene Kombination von Diolen aus den zwei Gruppen (I) und (II) war bisher im Stand der Technik für die Herstellung von Polyestern der bezeichneten Art, insbesondere zur Herstellung von Fasern, nicht in Betracht gezogen worden. Die erfindungsgemäße Auswahl im Zusammenhang mit Terephthalsäure und/oder Terephthalsäurederivaten im Rahmen einer Polykondensation zur Bildung der Polyester führt zu weiteren überraschenden Vorteilen. Die Polyester können durch gezielte Reaktionsführung, insbesondere durch exakte Temperatureinhaltung und durch die Wahl der Ausgangsmaterialien ohne nennenswerte Mengen unerwünschter Nebenerzeugnisse kostengünstig produziert werden. Dies kann diskontinuierlich aber auch kontinuierlich erfolgen, indem die Veresterung der Diolkomponenten mit der Terephthalsäure bzw. deren Derivaten, insbesondere durch Umesterung mit einem Dimethylester der Terephthalsäure, durchgeführt wird. Die angesprochenen Diole aus den zwei Gruppen können bei der Synthese direkt eingesetzt werden.

Die Verwendung des erfindungsgemäßen Polyesters bzw. deren Eignung zur Verbesserung der Eigenschaften schmelzgesponnener Polyester-Filamente bzw. Fasern bzw. der Garne hieraus war in der Fachwelt nicht bekannt. So war es dem Stand der Technik nicht entnehmbar, dass sich bei hohen Aufspulgeschwindigkeiten eine Erniedrigung des Kristallisationsgrades der Polyester-Filamentgarne erzielen lässt.

Die erfindungsgemäß herangezogenen Alkan-1,2-diole als Comonomere sind leicht und kostengünstig verfügbar. Der erfindungsgemäße Polyester kann bei wesentlich niedrigeren Temperaturen als das reine Polyethylenterephthalat hergestellt werden. Hierbei erweist sich die Verarbeitbarkeit mit niedrigerer Temperatur aufgrund der erniedrigten Schmelztemperaturen der Polyester als besonders vorteilhaft. Die Polyester sind vorzüglich für das Schmelzspinnen bei hohen Aufspulgeschwindigkeiten geeignet. Es lassen sich auf diese Weise schnellgesponnene POY-Garne herstellen, die sich durch eine wesentlich niedrigere Kristallinität auszeichnen. Die aus den erfindungsgemäßen Polyestern erhaltenen Garne sind bestens für die Weiterverarbeitung geeignet.

Von besonderem Interesse ist die Erfindung in ihrer Verwertung bei der Verwendung zur Produktionssteigerung bei unveränderter Faserqualität und verbesserten Weiterverarbeitungseigenschaften von Polyethylenterephthalat-POY. Als besonders überraschend ist es zu bewerten, dass die erfindungsgemäßen Polyester einfach und wirtschaftlich zu vorteilhaften Fasern durch ein Schmelzverspinnen verarbeitet werden können. Dieser Vorteil resultiert insbesondere daraus, dass sie gegenüber dem reinen Polyethylenterephthalat eine erniedrigte Schmelztemperatur aufweisen, so dass die Herstellung der Polyester und der über einen Schmelzspinnprozess hergestellten Fasern bzw. Filamente bei geringerer Temperatur erfolgen kann und somit durch geringere Anteile an Neben- /Abbauprodukten sowie durch niedrigere Energiekosten gekennzeichnet ist.

Es hat sich darüber hinaus gezeigt, dass bei der Faser-Herstellung anhand der erfindungsgemäßen Polyester weitere Vorteile auftreten, insbesondere bei der POY-Faserherstellung. Hierbei kann mit sehr hoher Aufspulgeschwindigkeit gearbeitet werden, insbesondere mit einer Aufspulgeschwindigkeit von 3000 bis 10000 m/min, insbesondere zwischen 3500 und 6000 m/min. Aus den hohen Aufspulgeschwindigkeiten resultiert eine erhöhte Produktivität. Zudem kann das Potential der Entwicklungen auf dem Maschinenbausektor der letzten Jahre ausgeschöpft werden.

Durch die erfindungsgemäße Modifizierung eines Polyesters wird der Schrumpfwert der daraus hergestellten Fasern, die bei hohen Aufspulgeschwindigkeiten hergestellt werden, nach den praktischen Anforderungen erhöht. Zudem zeigen die Polyesterfasern bereits bei einer Färbetemperatur von 80 bis 130, insbesondere von etwa 100 °C eine verbesserte Farbstoffaufnahme beim Färben. Die erfindungsgemäßen Fasern können einer Weiterverarbeitung unterzogen werden, so beispielsweise zu einem hochwertigen Vlies.

Es erweist sich somit, dass die Erfindung in ihren verschiedenen Ausgestaltungen gegenüber den Vergleichsprodukten des Standes der Technik erhebliche Vorteile bietet.

## Patentansprüche

1. Polyester auf der Basis eines Polykondensationsproduktes von Terephthalsäure und/oder Terephthalsäurederivaten mit zweiwertigen Alkoholen, **dadurch gekennzeichnet, dass** zweiwertige Alkohole so ausgewählt sind, dass (I) 70 bis weniger als 89 Mol-% eines Diols bzw. eines Diolgemisches, ausgewählt aus der aus Ethylenglykol, Propan-1,3-diol und Butan-1,4-diol bestehenden Gruppe, auf (II) 30 bis 11 Mol-% Alkan-1,2-diol, ausschließlich Ethylenglykol, entfallen und der Polyester einen Schmelzpunkt von 145 bis 275 °C (nach DIN EN ISO 53765) und eine intrinsische Viskosität (nach DIN 53728) von 0,5 bis 0,7 dl/g aufweist.

2. Polyester nach Anspruch 1, **dadurch gekennzeichnet, dass** die zweiwertigen Alkohole so ausgewählt sind, dass (I) 89 bis 80 Mol-% Ethylenglykol, Propan-1,3-diol und/oder Butan-1,4-diol auf (II) 20 bis 11 Mol-% Alkan-1,2-diol entfallen.

3. Polyester nach Anspruch 1 oder 2, **dadurch gekennzeichnet, dass** der Schmelzpunkt des Polyesters 190 bis 250 °C beträgt.

4. Polyester nach einem der Ansprüche 1 bis 3, **dadurch gekennzeichnet, dass** der Polyester eine intrinsische Viskosität (nach DIN 53728) von 0,55 bis 0,65 dl/g aufweist.

5. Polyester nach einem der Ansprüche 1 bis 4, **dadurch gekennzeichnet, dass** das Alkan-1,2-diol durch die folgende Formel (I) 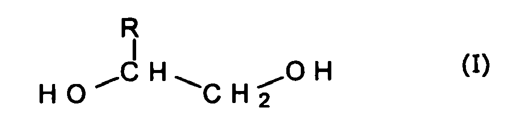 dargestellt wird, worin bedeuten: R einen Alkyl- oder einen Cycloalkyl-Rest.

6. Polyester nach Anspruch 5, **dadurch gekennzeichnet, dass** der Alkyl-Rest 1 bis 12 C-Atome und der Cycloalkyl-Rest 3 bis 6 C-Atome aufweist.

7. Polyester nach Anspruch 6, **dadurch gekennzeichnet, dass** der Alkyl-Rest 1 bis 6 Kohlenstoffatome aufweist, insbesondere einen Methyl-, Ethyl-, Propyl- und/oder Butyl-Rest darstellt, und der Cycloalkyl-Rest einen Cyclopropyl-, Cyclobutyl-, Cyclopentyl- oder Cyclohexyl-Rest darstellt.

8. Polyester nach mindestens einem der Ansprüche 1 bis 7, **dadurch gekennzeichnet, dass** der Alkyl-Rest und/oder der Cycloalkyl-Rest ganz oder teilweise durch einen Aryl-, Alkenyl- und/oder Cycloalkenyl-Rest ersetzt sind.

9. Polyester nach Anspruch 8, **dadurch gekennzeichnet, dass** der Aryl-Rest einen Phenyl-, Benzyl- und/oder Naphthyl-Rest, der Alkenyl-Rest einen Vinyl-, Allyl- und/oder Isopropenyl-Rest und/oder der Cycloalkenyl-Rest einen 2-Cyclopentenyl- und/oder Cyclohexenyl-Rest darstellen.

10. Polyester nach mindestens einem der Ansprüche 1 bis 9, **dadurch gekennzeichnet, dass** die Terephthalsäure und/oder das Terephthalsäurederivat ganz oder teilweise durch den Block einer anderen Dicarbonsäure substituiert sind, insbesondere durch Isophthalsäure, Naphthalin-2,6-dicarbonsäure, Hexamethylen-1,6-dicarbonsäure und/oder Tetramethylen-1,4-dicarbon-säure.

11. Polyester nach Anspruch 10, **dadurch gekennzeichnet, dass** weniger als 10 Mol % der Terephthalsäure und/oder der Terephthalsäurederivate durch eine andere Dicarbonsäure substituiert sind.

12. Polyester- nach Anspruch 11, **dadurch gekennzeichnet, dass** die Substitution weniger als 5 Mol-% beträgt.

13. Polyester nach mindestens einem der vorhergehenden Ansprüche, **dadurch gekennzeichnet, dass** das Terephthalsäurederivat als Terephthalsäuredimethylester vorliegt.

14. Formling, erhältlich mit einem Polyester nach mindestens einem der Ansprüche 1 bis 13, insbesondere in Form von Fasern oder Filamenten.

15. Verfahren zur Herstellung eines Polyesters nach mindestens einem der Ansprüche 1 bis 13, **dadurch gekennzeichnet, dass** Terephthalsäure und/oder Terephthalsäurederivate sowie (I) ein Diol oder ein Diolgemisch zweiwertiger Alkohole, ausgewählt aus der aus Ethylenglykol, Propan-1,3-diol und Butan-1,4-diol bestehenden Gruppe, sowie (II) das (die) jeweilige(n) Alkan-1,2-diol(e) bei erhöhter Temperatur von 180 bis 290 °C umgesetzt werden, insbesondere bei einer Temperatur von 180 bis 270 °C, wobei die Ausgangsmaterialien in Übereinstimmung mit den qualitativen und quantitativen Angaben des Anspruchs 1 eingestellt werden und das Verfahren so geführt wird, dass der erhaltene Polyester einen Schmelzpunkt von 145 bis 275 °C (nach DIN EN ISO 53765) und eine intrinsische Viskosität (nach DIN 53728) von 0,5 bis 0,7 dl/g aufweist.

16. Verfahren nach Anspruch 15, **dadurch gekennzeichnet, dass** die Umsetzung bei einer Temperatur von 220 bis 270 °C erfolgt.

17. Verfahren nach Anspruch 16, **dadurch gekennzeichnet, dass** das Verfahren kontinuierlich durchgeführt wird.

18. Verfahrens nach Anspruch 17, **dadurch gekennzeichnet, dass** das Verfahren kontinuierlich in einem Strömungsrohr, in einer Rührkesselkaskade oder in einem Ringscheibenreaktor durchgeführt wird.

19. Verfahren nach einem der Ansprüche 15 bis 18, **dadurch gekennzeichnet, dass** bei der Polykondensation Kettenverlängerer herangezogen werden, insbesondere in Form von Bis-2-oxazolinen und/oder Bis-acyllactamaten.

20. Verwendung der Polyester nach mindestens einem der Ansprüche 1 bis 13 zur Herstellung von Formlingen, insbesondere von Fasern und Filamenten durch Schmelzverspinnen sowie von Folien, Flaschen und anderen Formteilen nach dem Spritzgussverfahren.

21. Verwendung nach Anspruch 20, **dadurch gekennzeichnet, dass** das Schmelzverspinnen bei einer Temperatur von 220 bis 270 °C, insbesondere von 245 bis 270 °C, durchgeführt wird.

22. Verwendung nach Anspruch 20 oder 21, **dadurch gekennzeichnet, dass** bei der Faser-Herstellung, insbesondere bei der POY-Faserherstellung, mit hoher Aufspulgeschwindigkeit gearbeitet wird, insbesondere mit einer Aufspulgeschwindigkeit von 3000 bis 10.000 m/min.

23. Verwendung nach Anspruch 22, **dadurch gekennzeichnet, dass** die Aufspulgeschwindigkeit 3500 bis 6000 m/min beträgt.

24. Verwendung nach mindestens einem der Ansprüche 20 bis 23, **dadurch gekennzeichnet, dass** die durch das Schmelzverspinnen erhaltenen Fasern zu einem Vlies verarbeitet werden.

25. Verwendung nach mindestens einem der Ansprüche 20 bis 24, **dadurch gekennzeichnet, dass** die erhaltenen Fasern bei einer Temperatur von 80 bis 130°C, insbesondere bei etwa 100 °C angefärbt werden.

## Claims

1. A polyester on the basis of a polycondensation product of terephthalic acid and/or terephthalic acid derivatives with bivalent alcohols, **characterised in that** bivalent alcohols are so selected that (I) 70 to less than 89 Mol% of a diol or a diol mixture selected from the group consisting of ethylene glycol, propane-1,3-diol and butane-1,4-diol to (II) 30 to 11 Mol% alkane-1,2-diol, excluding ethylene glycol, are present and the polyester has a melting point of 145 to 275°C (in accordance with DIN EN ISO 53765) and an intrinsic viscosity (in accordance with DIN 53728) of 0.5 to 0.7 dl/g.

2. A polyester as claimed in Claim 1, **characterised in that** the bivalent alcohols are so selected that (I) 89 to 80 Mol% ethylene glycol, propane-1,3-diol and/or butane-1,4-diol to (II) 20 to 11 Mol% alkane-1,2-diol are present.

3. A polyester as claimed in Claim 1 or 2, **characterised in that** the melting point of the polyester is 190 to 250°C.

4. A polyester as claimed in one of Claims 1 to 3, **characterised in that** the polyester has an intrinsic viscosity (in accordance with DIN 53728) of 0.55 to 0.65 dl/g.

5. A polyester as claimed in one of Claims 1 to 4, **characterised in that** the alkane-1,2-diol is represented by the following formula (I) 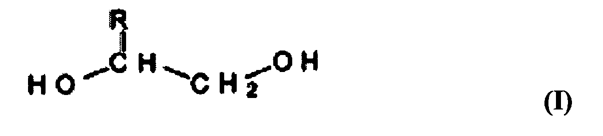 wherein R represents an alkyl or a cycloalkyl residue.

6. A polyester as claimed in Claim 5, **characterised in that** the alkyl residue has 1 to 12 C atoms and the cycloalkyl residue has 3 to 6 C atoms.

7. A polyester as claimed in Claim 6, **characterised in that** the alkyl residue has 1 to 6 carbon atoms and constitutes, in particular, a methyl, ethyl, propyl and/or butyl residue, and the cycloalkyl residue constitutes a cyclopropyl, cyclobutyl, cyclopentyl or cyclohexyl residue.

8. A polyester as claimed in at least one of Claims 1 to 7, **characterised in that** the alkyl residue and/or the cycloalkyl residue are replaced wholly or partially by an aryl, alkenyl and/or cycloalkenyl residue.

9. A polyester as claimed in Claim 8, **characterised in** the aryl residue constitutes a phenyl, benzyl and/or naphthyl residue, the alkenyl residue constitutes a vinyl, allyl and/or isopropenyl residue and/or the cycloalkenyl residue constitutes a 2-cyclopentenyl and/or cyclohexenyl residue.

10. A polyester as claimed in at least one of Claims 1 to 9, **characterised in that** the terephthalic acid and/or the terephthalic acid derivative are substituted wholly or partially by the block of another dicarbonic acid, particularly by isophthalic acid, naphthalin-2,6-dicarbonic acid, hexamethylene-1,6-dicarbonic acid and/or tetramethylene-1,4-dicarbonic acid.

11. A polyester as claimed in Claim 10, **characterised in that** less than 10 Mol% of the terephthalic acid and/or the terephthalic acid derivative is substituted by another dicarbonic acid.

12. A polyester as claimed in Claim 11, **characterised in that** the substitution is less than 5 Mol%.

13. A polyester as claimed in at least one of the preceding claims, **characterised in that** the terephthalic acid derivative is present in the form of terephthalic acid dimethylester.

14. A moulded article producible with a polyester as claimed in at least one of Claims 1 to 13, particularly in the form of fibres or filaments.

15. A method of manufacturing a polyester as claimed in at least one of Claims 1 to 13, **characterised in that** the terephthalic acid and/or the terephthalic acid derivative and (I) a diol or a diol mixture of bivalent alcohols, selected from the group consisting of ethylene glycol, propane-1,3-diol and butane-1,4-diol, and (II) the respective alkane-1,2-diol(s) are converted at an elevated temperature of 180 to 290°C, particularly at a temperature of 180 to 270°C, wherein the starting materials are set in accordance with the qualitative and quantitative indications in Claim 1 and the method is so conducted that the polyester which is obtained has a melting point of 145 to 275°C (in accordance with DIN EN ISO 53765) and has an intrinsic viscosity (in accordance with DIN 53728) of 0.5 to 0.7 dl/g.

16. A method as claimed in Claim 15, **characterised in that** the conversion occurs at a temperature of 220 to 270°C.

17. A method as claimed in Claim 16, **characterised in that** the method is conducted continuously.

18. A method as claimed in Claim 17, **characterised in that** the method is conducted continuously in a flow tube, in a stirring vessel cascade or in an annular disc reactor.

19. A method as claimed in one of Claims 15 to 18, **characterised in that** chain extenders are used in the polycondensation, particularly in the form of bis-2-oxazolines and/or bis-acyllactamates.

20. Use of the polyester as claimed in at least one of Claims 1 to 13 for producing moulded articles, particularly fibres and filaments by melt spinning, and films, bottles and other moulded components by injection moulding.

21. Use as claimed in Claim 20, **characterised in that** the melt spinning is performed at a temperature of 220 to 270°C, particularly 245 to 270°C.

22. Use as claimed in Claim 20 or 21, **characterised in that** a high winding speed, particularly a winding speed of 3000 to 10,000 m/min, is used in the fibre manufacture, particularly in the POY fibre manufacture.

23. Use as claimed in Claim 22, **characterised in that** the winding speed is 3500 to 6000 m/min.

24. Use as claimed in at least one of Claims 20 to 23, **characterised in that** the fibres produced by the melt spinning are processed into a fleece.

25. Use as claimed in at least one of Claims 20 to 24, **characterised in that** the fibres produced are coloured at a temperature of 80 to 130°C, particularly at about 100°C.

## Revendications

1. Polyester à base d'un produit de polycondensation de l'acide téréphtalique et/ou de dérivés de l'acide téréphtalique avec des alcools bivalents, **caractérisé en ce que** les alcools bivalents sont choisis de telle sorte que (I) de 70 à moins de 89 % en moles d'un diol ou d'un mélange de diols, choisis dans le groupe constitué de l'éthylèneglycol, du propane-1,3-diol et du butane-1,4-diol, soient présents pour (II) de 30 à 11 % en moles d'alcane-1,2-diol, à l'exclusion de l'éthylèneglycol, et le polyester possède un point de fusion de 145 à 275°C (conformément à DIN EN ISO 53765) et une viscosité intrinsèque (conformément à DIN 53728) de 0,5 à 0,7 dl/g.

2. Polyester selon la revendication 1, **caractérisé en ce que** les alcools bivalents sont choisis de telle sorte que (I) de 89 à 80 % en moles d'éthylèneglycol, de propane-1,3-diol et/ou de butane-1,4-diol soient présents pour (II) de 20 à 11 % en moles d'alcane-1,2-diol.

3. Polyester selon la revendication 1 ou 2, **caractérisé en ce que** le point de fusion du polyester est de 190 à 250°C.

4. Polyester selon l'une des revendications 1 à 3, **caractérisé en ce que** le polyester possède une viscosité intrinsèque (conformément à DIN 53728) de 0,55 à 0,65 dl/g.

5. Polyester selon l'une des revendications 1 à 4, **caractérisé en ce que** l'alcane-1,2-diol est représenté par la formule (I) suivante 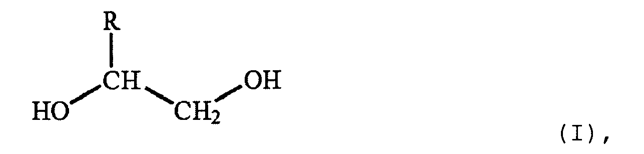 dans laquelle R désigne un radical alkyle ou cycloalkyle.

6. Polyester selon la revendication 5, **caractérisé en ce que** le radical alkyle comprend de 1 à 12 atomes de carbone et le radical cycloalkyle comprend de 3 à 6 atomes de carbone.

7. Polyester selon la revendication 6, **caractérisé en ce que** le radical alkyle comprend de 1 à 6 atomes de carbone, représente en particulier un radical méthyle, éthyle, propyle et/ou butyle, et le radical cycloalkyle représente un radical cyclopropyle, cyclobutyle, cyclopentyle ou cyclohexyle.

8. Polyester selon au moins l'une des revendications 1 à 7, **caractérisé en ce que** le radical alkyle et/ou le radical cycloalkyle sont remplacés totalement ou en partie par un radical aryle, alcényle et/ou cycloalcényle.

9. Polyester selon la revendication 8, **caractérisé en ce que** le radical aryle représente un radical phényle, benzyle et/ou naphtyle, le radical alcényle représente un radical vinyle, allyle et/ou isopropényle et/ou le radical cycloalcényle représente un radical 2-cyclopentényle et/ou cyclohexényle.

10. Polyester selon au moins l'une des revendications 1 à 9, **caractérisé en ce que** l'acide téréphtalique et/ou le dérivé de l'acide téréphtalique sont substitués totalement ou en partie par le bloc d'un autre acide dicarboxylique, en particulier par l'acide isophtalique, l'acide naphtaline-2,6-dicarboxylique, l'acide hexaméthylène-1,6-dicarboxylique et/ou l'acide tétraméthylène-1,4-dicarboxylique.

11. Polyester selon la revendication 10, **caractérisé en ce que** moins de 10 % en moles de l'acide téréphtalique et/ou des dérivés de l'acide téréphtalique sont substitués par un autre acide dicarboxylique.

12. Polyester selon la revendication 11, **caractérisé en ce que** la substitution est inférieure à 5 % en moles.

13. Polyester selon au moins l'une des revendications précédentes, **caractérisé en ce que** le dérivé de l'acide téréphtalique est présent sous forme d'ester diméthylique de l'acide téréphtalique.

14. Article moulé pouvant être obtenu au moyen d'un polyester selon au moins l'une des revendications 1 à 13, en particulier sous la forme de fibres ou de filaments.

15. Procédé de production d'un polyester selon au moins l'une des revendications 1 à 13, **caractérisé en ce que** l'acide téréphtalique et/ou les dérivés de l'acide téréphtalique ainsi que (I) un diol ou un mélange de diols d'alcools bivalents, choisis dans le groupe constitué de l'éthylèneglycol, du propane-1,3-diol et du butane-1,4-diol, ainsi que (II) le ou les alcane-1,2-diols respectifs sont mis en réaction à une température élevée de 180 à 290°C, en particulier à une température de 180 à 270°C, dans lequel les matières premières sont utilisées en conformité avec les informations qualitatives et quantitatives de la revendication 1 et le procédé est conduit de telle sorte que le polyester obtenu possède un point de fusion de 145 à 275°C (conformément à DIN EN ISO 53765) et une viscosité intrinsèque (conformément à DIN 53728) de 0,5 à 0,7 dl/g.

16. Procédé selon la revendication 15, **caractérisé en ce que** la mise en réaction s'effectue à une température de 220 à 270°C.

17. Procédé selon la revendication 16, **caractérisé en ce que** le procédé est mis en oeuvre en continu.

18. Procédé selon la revendication 17, **caractérisé en ce que** le procédé est mis en oeuvre en continu dans un tube à écoulement, dans une cascade de récipients d'agitation ou dans un réacteur à disques annulaires.

19. Procédé selon l'une des revendications 15 à 18, **caractérisé en ce que** des extenseurs de chaîne sont utilisés lors de la polycondensation, en particulier sous la forme de bis-2-oxazolines et/ou de bis-acyl-lactamates.

20. Utilisation du polyester selon au moins l'une des revendications 1 à 13 pour la production d'articles moulés, en particulier de fibres et de filaments par filage à l'état fondu ainsi que de films, de bouteilles et d'autres pièces moulées selon le procédé de moulage par injection.

21. Utilisation selon la revendication 20, **caractérisée en ce que** le filage à l'état fondu est mis en oeuvre à une température de 220 à 270°C, en particulier de 245 à 270°C.

22. Utilisation selon la revendication 20 ou 21, **caractérisée en ce que** lors de la production de fibres, en particulier lors de la production de fibres POY, une vitesse de bobinage élevée est utilisée, en particulier une vitesse de bobinage de 3000 à 10 000 m/min.

23. Utilisation selon la revendication 22, **caractérisée en ce que** la vitesse de bobinage est de 3500 à 6000 m/min.

24. Utilisation selon au moins l'une des revendications 20 à 23, **caractérisée en ce que** les fibres obtenues par le filage à l'état fondu sont transformées en tissu non tissé.

25. Utilisation selon au moins l'une des revendications 20 à 24, **caractérisée en ce que** les fibres obtenues sont teintes à une température de 80 à 130°C, en particulier à environ 100°C.
